# EUROPÄISCHE PATENTSCHRIFT

(11) **EP 2 193 021 B1**
(45) Veröffentlichungstag und Bekanntmachung des Hinweises auf die Patenterteilung: **09.04.2014**
(21) Anmeldenummer: 08804687.5
(22) Anmeldetag: 24.09.2008
(51) Int. Cl.: B32B 5/20, B32B 27/34, B32B 15/08, B29C 44/32, B32B 15/18, B32B 15/20, B32B 37/15

(54) **VERFAHREN ZUR HERSTELLUNG EINES LEICHTBLECHS**
METHOD OF PRODUCTION OF A LIGHT SHEET METAL
PROCÉDÉ DE PRODUCTION D'UNE TÔLE LÉGÈRE

(30) Priorität: 26.09.2007 DE 102007046226
(43) Veröffentlichungstag der Anmeldung: 09.06.2010
(73) Patentinhaber: ThyssenKrupp Steel Europe AG, 47166 Duisburg (DE)
(72) Erfinder: BÖGER, Thorsten, 47226 Duisburg (DE); KLAUKE, Peter, 58239 Schwerte (DE); KLEINSCHMIDT, Oliver, 44137 Dortmund (DE); FILTHAUT, Christoph, 44227 Dortmund (DE); ROGNER, Ingo, 85049 Ingolstadt (DE); THÖLE, Oliver, 58239 Schwerte (DE)
(74) Vertreter: Cohausz & Florack
(86) Internationale Anmeldenummer: PCT/EP2008/062783
(87) Internationale Veröffentlichungsnummer: WO 2009/043777

(56) Entgegenhaltungen:
- EP-A- 1 044 796
- DE-A1- 19 724 361
- US-A1- 2007 166 526

## Beschreibung

Die Erfindung betrifft ein Verfahren zur Herstellung eines Verbundbauteils aufweisend mindestens ein erstes und ein zweites Metallblech mit mindestens einer zwischen dem ersten und dem zweiten Metallblech angeordneten Schicht aus einem Polymer sowie ein entsprechendes Verbundbauteil sowie dessen Verwendung.

Im Kraftfahrzeugbau werden in hohem Maße Leichtbauteile verwendet, welche neben einem geringen Gewicht zusätzlich hohe Festigkeiten und Steifigkeiten aufweisen müssen. Häufig dienen entsprechende Leichtbauteile, beispielsweise bei einer Kraftfahrzeugkarosserie, auch als Außenhautteile, so dass deren Oberflächen entsprechend hohen Anforderungen genügen müssen. Ein Ansatz zur Erreichung dieses Ziels ist, unterschiedliche Werkstoffe miteinander zu kombinieren. So sind beispielsweise aus der deutschen Offenlegungsschrift DE 10 2004 022 677 A1Verbundbauteile bekannt, welche als eine Sandwichstruktur aus zwei äußeren Metallblechen und einer inneren Polymerschicht bestehen, wobei die Polymerschicht als Schaumstoff ausgebildet ist. Allerdings muss zur Verbindung der Metallteile mit der Polymerschicht ein Klebstoff oder Haftvermittler sorgfältig aufgetragen werden. Zudem ist ein Doppeltransportband offenbart, das die Dicke der Reaktivschaumschicht begrenzen und durch beheizbare Abschnitte den reaktiven Aufschäumprozess unterstützen soll.

Des Weiteren sind aus der deutschen Patentanmeldung DE 197 24 361 A1 und der europäischen Patentanmeldung EP 1 044 796 A2 Verfahren zur Herstellung von Verbundteilen bekannt, bei welchen dem Polypropylen in einem Extruder ein schaumbildendes Additiv zugesetzt wird und das Extrudat unter Einwirkung von Hitze und Druck mit zwei jeweils von einem Coil abgerollten Aluminiumbändern laminiert wird.

Darüber hinaus ist aus der veröffentlichten europäischen Patentanmeldung EP 1 504 892 A1 bekannt, zwischen zwei Metallbleche eine Polymerschicht bestehend aus einem Polyamid oder einem Polyamid-Polyethylenblend vorzusehen. Dieses Verbundbauteil ist jedoch bezüglich seines Gewichts verbesserungsfähig.

Schließlich ist aus der US-amerikanischen Patentanmeldung US 2007/0166526 A1 ein Verfahren zur Herstellung eines blechförmigen Verbundbauteils bekannt, welches durch Thermoformen eines Verbundblechteils hergestellt wird, wobei das Verbundbauteil ein erstes und ein zweites Metallblech mit einer zwischen dem ersten und dem zweiten Metallblech angeordneten Schicht aus einem Polymer, insbesondere aus einem Polyamid-Polycarbonatblend aufweist. Zur Ausbildung einer Polymerschaumschicht wird darin alternativ zum Zusetzen von Polycarbonat das Einbringen eines Treibmittels, beispielsweise eines Gases, in eine Polyamidschmelze vorgeschlagen.

Hiervon ausgehend liegt der vorliegenden Erfindung die Aufgabe zugrunde, ein Verfahren zur Herstellung eines in Bezug auf sein Gewicht, seine Oberfläche optimiertes Verbundbauteil vorzuschlagen, welches gleichzeitig einfach herstellbar ist. Die oben aufgezeigte Aufgabe wird gemäß einer ersten Lehre der vorliegenden Erfindung dadurch gelöst, dass ein erstes Metallband von einem ersten Coil und ein zweites Metallband von einem zweiten Coil abgewickelt wird,
- auf mindestens ein Metallband eine thermoplastische Polymerschaumschicht enthaltend ein Polyamid-Polyethylenblend aufgebracht wird;
- die Ausbildung der Polymerschaumschicht durch physikalisches Einbringen von Gasblasen in die Polymerschmelze erfolgt, so dass die Polymerschaumschicht einen Volumenanteil an Gasblasen von 1 % bis 80 %, vorzugsweise 5 % bis 70 % aufweist;
- das erste Metallband, die thermoplastische Polymerschaumschicht und das zweite Metallband durch Temperatureinwirkung und Druckausüben miteinander verbunden werden und
- das hergestellte, bandförmige Verbundbauteil auf ein Coil aufgewickelt oder zu blechförmigen Verbundbauteilen geschnitten wird.

Es hat sich gezeigt, dass die Verwendung einer thermoplastischen Polymerschaumschicht mit einem Volumenanteil an Gasblasen von 1 % bis 80 %, vorzugsweise 5 % bis 70 % zu einer deutlichen Verringerung des Gewichts eines Verbundbauteils bestehend aus zwei Metallblechen und einer dazwischenliegenden Polymerschicht führt und gleichzeitig ein Klebstoff als Haftvermittler nicht mehr verwendet werden muss. Dies vereinfacht die Herstellung des Verbundbauteils deutlich und führt zu leichteren Verbundbauteilen. Erfolgt die Ausbildung der Polymerschaumschicht ferner durch physikalisches Einbringen von Gasblasen mit einem Volumenanteil von 1 % bis 80 %, insbesondere 5 % bis 70 %, in die Polymerschmelze, kann unmittelbar auf die Dichte des hergestellten Polymerschaums Einfluss genommen werden. Bei dem beim Aufschäumen verwendeten Gas kann es sich beilspielsweise um Luft, Kohlendioxid, Stickstoff oder ein anderes beliebiges Gas oder gegebenenfalls auch eine Kombination von Gasen handeln.

Vereinfacht wird das Verfahren zur Herstellung des erfindungsgemäßen Verbundbauteils dadurch, dass gemäß einer nächsten Ausführungsform die Polymerschaumschicht als vorextrudierte Folie auf das erste Metallband aufgebracht wird oder die Polymerschaumschicht direkt auf das erste Metallband extrudiert wird. Die vorextrudierte Folie kann bei der bandförmigen Verarbeitung des Metallbands einfach über ein weiteres Coil zur Verfügung gestellt werden und entsprechend mit den Metallbändern durch Druckbeaufschlagung und Erwärmung verbunden werden. Eine weitere Vereinfachung des Verfahrens wird dadurch erreicht, dass die Polymerschaumschicht direkt auf das erste Metallband extrudiert wird, wobei ausgenutzt wird, dass beim Aufextrudieren die Polymerschaumschicht unmittelbar in einem Haftungseigenschaften aufweisenden Zustand vorliegt.

Gemäß einer nächsten Ausgestaltung des erfindungsgemäßen Verfahrens wird das erste Metallband vor dem Aufbringen der Polymerschaumschicht und/oder das zweite Metallband vor dem Aufbringen auf die Polymerschaumschicht erwärmt. Die Erwärmung führt dazu, dass die thermoplastische Polymerschaumschicht an der Grenze zum Metall in weichem Zustand verbleibt und insofern eine gute Haftung zum Metallblech hervorruft. Aufgrund der Isolierungswirkung der Gasblasen können die Temperaturen niedriger gehalten werden und ein breites Temperaturfenster für den Verbindungsprozess ermöglicht werden.

Darüber hinaus ist es vorteilhaft das erste Metallband, die Polymerschaumschicht und das zweite Metallband durch Verwendung einer Doppelbandpresse miteinander zu verbinden, wobei innerhalb der Doppelbandpresse eine geregelte Druck- und Temperaturführung sowie eine Abstandsregelung erfolgt. Im Gegensatz zu den üblicherweise verwendeten, gegengelagerten Walzen kann über die Doppelbandpresse über die Temperaturführung sowie über die Druckführung gezielt Einfluss auf die Haftung der Polymerschaumschicht an den Metallbändern Einfluss genommen werden und insofern ein verbessertes bandförmiges Verbundbauteil zur Verfügung gestellt werden. Insbesondere können mit diesem Verfahren gleichmäßigere, vor allem über die gesamte Breite exakt einstellbare Polymerschaumschichtdicken erzielt werden, so dass die damit hergestellten Verbundbauteile sehr gut als Außenhautteile mit höchsten Oberflächeneigenschaften verwendbar sind.

Gemäß einer vorteilhaften Ausführungsform weist die Doppelbandpresse zumindest eine Heizzone und eine Abkühlzone sowie optional eine Druckzone auf. Die Heizzone und die Abkühlzone sorgen für einen kontrollierten Verbindungsprozess im Bereich der Doppelpresse. Für die Heizzone und die Abkühlzone ist vorzugsweise jeweils ein eigenes Endlosband zur Führung des bandförmigen Verbundbauteils vorgesehen, um die Temperaturführung weiter zu verbessern. Die optional vorgesehene Druckzone kann zur Kalibrierung genutzt und beispielsweise durch ein Walzenpaar realisiert werden. Über ein Walzenpaar lassen sich sehr genau größere Drücke einstellen, um eine verbesserte Gleichmäßigkeit der Dicke des bandförmigen Verbundbauteils zu erzielen. Im Ergebnis weist das bandförmige Verbundbauteil auch eine verbesserte Oberfläche auf.

Zur optimalen Temperaturführung wird vorzugsweise das zweite Metallband vor dem Verbinden mit der Polymerschaumschicht und dem ersten Metallband erwärmt, so dass in der nachgelagerten Druckbeaufschlagung keine vollständige Erwärmung des zweiten Metallbandes erfolgen muss.

Werden gemäß einer weiteren vorteilhaften Ausführungsform des erfindungsgemäßen Verfahrens Kaschierbänder in der Doppelbandpresse verwendet, deren auf dem bandförmigen Verbundbauteil aufliegende äußere Oberfläche beschichtet und optional Oberflächen bearbeitet ist, können die äußeren Oberflächen des bandförmigen Verbundbauteils vor negativen Produktionseinflüssen und Produktionsfehlern geschützt werden. Beispielsweise können mit Silikon beschichtete und geschliffene Kaschierbändern sehr gute Ergebnisse hinsichtlich der Oberflächenqualität des bandförmigen Verbundbauteils erzielt werden.

Schließlich kann das erfindungsgemäße Verfahren dadurch weiter vorteilhaft ausgestaltet werden, dass das bandförmige Verbundbauteil vor und/oder nach der Vereinzelung zu blechförmigen Verbundbauteilen umgeformt wird. Dies ergibt eine besonders wirtschaftliche Herstellweise des erfindungsgemäßen Verbundbauteils.

Gemäß einer zweiten Lehre der vorliegenden Erfindung wird die oben aufgezeigte Aufgabe für ein gattungsgemäßes Verbundbauteil dadurch gelöst, dass die Polymerschicht mindestens eine Polymerschaumschicht aus einem thermoplastischen Polymer enthaltend ein Polyamid-Polyethylenblend aufweist, wobei die Polymerschaumschicht Gasblasen mit einem Volumenanteil von 1 % bis 80 %, insbesondere 5 % bis 70 % aufweist.

Es hat sich gezeigt, dass die Verwendung einer Polymerschaumschicht deutlich zur Gewichtsreduzierung eines Verbundbauteils bei gleichbleibender Festigkeit und Steifigkeit beitragen kann. Durch Einbringen bzw. Ausbildung von Gasblasen in der Polymerschaumschicht lässt sich das Gewicht der Verbundbauteile und der Verbrauch von Polymeren während der Herstellung der Schaumschicht durch entsprechende volumenanteilige Substitution verringern, wodurch auch die Kosten zur Herstellung gesenkt werden können. Darüber hinaus kann durch die Verwendung thermoplastischer Polymere auf den Einsatz eines

Klebstoffs als Haftvermittler verzichtet werden, da eine Anbindung an das Metallbauteil durch eine Erwärmung und Abkühlen des thermoplastischen Polymers erzielt werden kann.

Gemäß einer ersten Ausgestaltung des erfindungsgemäßen Verbundbauteils besteht die Polymerschaumschicht aus einem temperaturbeständigen, thermoplastischen Polymer. Temperaturfeste, thermoplastische Polymere im Sinne der vorliegenden Erfindung sind beispielsweise Polymere, welche bei einer Erwärmung auf 210 °C für eine kurze Zeit und bei einer Erwärmung auf 190 °C für mindestens 20 min. keinen Formverlust zeigen. Das Verbundbauteil ist damit geeignet, insbesondere nachfolgende Lackierschritte mit anschließendem Aushärten der Lackschicht schadlos zu überstehen.

Erfindungsgemäß enthält die Polymerschaumschicht ein Polyamid-Polyethylenblend, wodurch die Materialkosten für die Polymerschaumschicht gering gehalten werden. Darüber hinaus ist ein entsprechendes Polyamidblend temperaturbeständig.

Gemäß einem nächsten Ausführungsbeispiel des erfindungsgemäßen Verbundbauteils beträgt die Schichtdicke der Polymerschicht zwischen 50 µm und 5000 µm, vorzugsweise zwischen 200 µm und 1000 µm. Bei den genannten Schichtdicken ist einerseits die notwendige Festigkeit und Steifigkeit des Verbundes gegeben. Andererseits wird eine ausreichende Gewichtsreduzierung im Vergleich zum Vollmaterial erzielt.

Gemäß einer nächsten weitergebildeten Ausführungsform des erfindungsgemäßen Verbundteils beträgt die Dicke der verwendeten Metallbleche zwischen 0,15 und 3,0 mm. Bevorzugt wird eine Metallblechdicke von 0,2 bis 0,5 mm, insbesondere von 0,2 bis 0,4 mm, verwendet, da in diesem Bereich optimale Verformungseigseinschaften beispielsweise im Hinblick auf den Einsatz als Außenhautteil einer Kraftfahrzeugkarosserie des erfindungsgemäßen Verbundbauteils gegeben sind.

Um das Verbundbauteil an eine spezifische Anwendung optimal anzupassen, können die Blechdicken für das erste und zweite Metallblech unterschiedlich sein.

Ebenfalls anwendungsspezifisch können die Metallbleche aus Legierungen aus Stahl, auch Edelstahl, Aluminium, Magnesium und/oder Titan bestehen. Auch andere Metalle, welche zu Blechen verarbeitbar sind, können bei dem erfindungsgemäßen Verbundbauteil verwendet werden. Insbesondere kann auch eine Kombination unterschiedlicher Metalllegierungen oder Metalle verwendet werden.

Zur Optimierung der Eigenschaften eines erfindungsgemäßen Verbundbauteils ist mindestens ein Metallblech ein- oder zweiseitig beschichtet. Die Beschichtungen können beispielsweise metallisch oder auch organisch sein. Hierzu stehen die unterschiedlichsten Verfahren zur Aufbringung der metallischen Beschichtungen zur Verfügung, beispielsweise elektrolytisches Aufbringen, Schmelztauchen, Walzplattieren oder auch die physikalische Dampfphasenabscheidung bzw. chemische Dampfphasenabscheidung.

Vorteilhaft ist es, wenn ein Metallblech mit einem Haftlack oder einer anderen Vorbehandlung vorbehandelt ist. Mittels des Haftlacks werden die Hafteigenschaften der Polymerschaumschicht verbessert. Die Beschichtungen können hierzu beispielsweise in einem Coil-Coating-Verfahren auf das Metallblech aufgebracht werden. Andere Auftragsverfahren stehen selbstverständlich ebenfalls zur Aufbringung organischer Beschichtungen zur Verfügung. Die Verbundhaftung verbessernde Beschichtung des Verbundbauteils ist üblicherweise an der Grenzfläche zur Polymerschaumschicht aufgebracht. Andere Funktionen, beispielsweise dekorative Zwecke, Korrosionsschutzzwecke oder aber auch eine ölfreie Umformung des Verbundbauteils gewährleistende Beschichtungen sind auch möglich. Ein zeitweilige Korrosionsschutz kann beispielsweise durch Ölen der Metallbleche erreicht werden. Das Öl wird jedoch vor der Herstellung des Verbundbauteils üblicherweise gründlich entfernt.

Das erfindungsgemäße Verbundbauteil kann unmittelbar im Kraftfahrzeugbau eingesetzt werden, wenn dieses nach dessen Herstellung in einem nachgelagerten Umformverfahren zu einer Vorform oder zur Endform umgeformt worden ist.

Gemäß einer dritten Lehre der vorliegenden Erfindung wird das erfindungsgemäße Verbundbauteil vorteilhaft im Kraftfahrzeugbau, Flugzeugbau, Schiff-, U-Boot-, Schienenfahrzeugbau, in der Raumfahrt oder im Bauwesen verwendet. Vorteile ergeben sich nämlich durch das erfindungsgemäße Verbundbauteil überall dort, wo Leichtbaukonzepte zur Gewichtseinsparung zwingen.

Es gibt nun eine Vielzahl von Möglichkeiten das erfindungsgemäße Verbundbauteil, dessen Herstellverfahren und dessen Verwendung auszugestalten und weiterzubilden. Hierzu wird verwiesen einerseits auf die den Patentansprüchen 1 und 8 nachgeordneten Patentansprüche. Andererseits auf die Beschreibung zweier Ausführungsbeispiele in Verbindung mit der Zeichnung. In der Zeichnung zeigt
- Fig. 1: in einer schematischen Schnittansicht ein erstes Ausführungsbeispiel eines erfindungsgemäßen Verbundbauteils,
- Fig. 2: eine schematische Darstellung einer Vorrichtung zur Durchführung eines ersten Ausführungsbeispiels des erfindungsgemäßen Verfahrens zur Herstellung eines Verbundbauteils und
- Fig. 3: eine schematische Darstellung einer Vorrichtung zur Durchführung eines zweiten Ausführungsbeispiels.

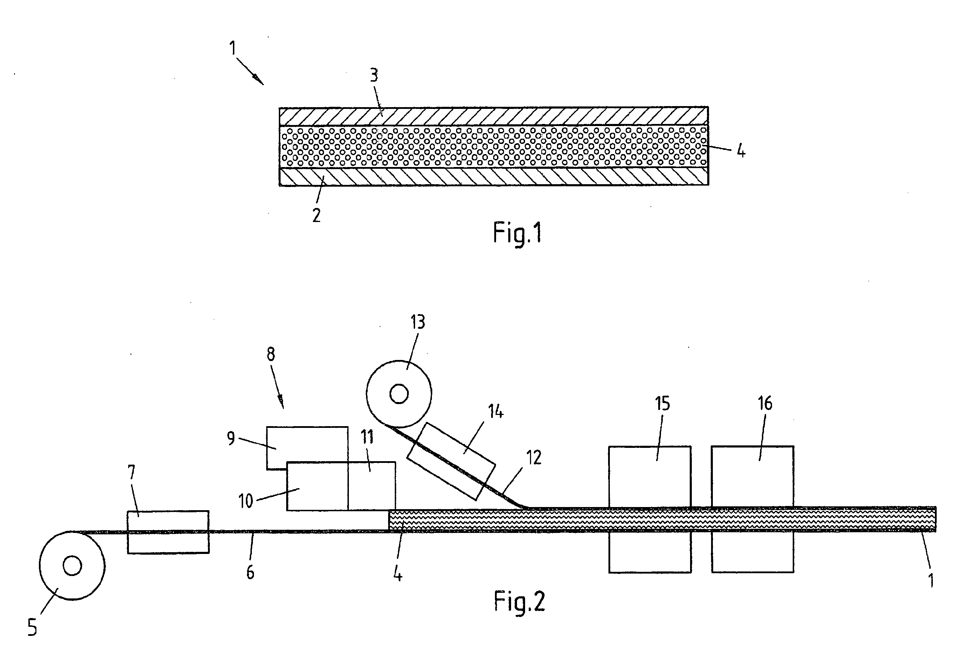

Das in Fig. 1 dargestellte Verbundbauteil 1 besteht aus einem ersten Metallblech 2, einem zweiten Metallblech 3 sowie einer zwischen beiden Metallblechen angeordneten Polymerschaumschicht 4. Die Polymerschaumschicht 4 besteht gemäß dem vorliegenden Ausführungsbeispiel des erfindungsgemäßen Verbundbauteils 1 aus einem temperaturfesten Polymerschaum aus einem Polyamid-Polyethylenblend mit Luftblasen mit einem Volumenanteil von 40 %. Durch die Verwendung eines Polymerschaums wird die Masse des Polymers zwischen den Metallblechen deutlich verringert, ohne die Festigkeitseigenschaften zu verschlechtern. Aufgrund dieser Gewichtseinsparung sind die erfindungsgemäßen Verbundbauteile 1 besonders gut für Leichtbaukonzepte im Kraftfahrzeugbau, Flugzeugbau oder Schienenfahrzeugbau verwendbar. Allerdings ergeben sich aufgrund der Eigenschaften der Verbundbauteile weitere hier nicht genannte Anwendungsgebiete im Leichtbau.

In Fig. 2 ist nun schematisch eine Vorrichtung zur Herstellung eines Ausführungsbeispiels eines erfindungsgemäßen Verbundbauteils 1 dargestellt. Über ein erstes Coil 5 wird ein erstes Metallband 6 zur Verfügung gestellt, welches in einer Heizstrecke 7 vorgewärmt wird. Das Metallband 6 kann aus den unterschiedlichsten Metallen bzw. Legierungen bestehen, beispielsweise Stahl, Aluminium, Titan etc.. Bei Stahllegierungen hat das Metallband vorzugsweise eine Dicke von 0,15 bis 0,8 mm, um als Außenhaut im Karosseriebau besonders gut einsetzbar zu sein. Bei der Verwendung von anderen Metallen zur Herstellung des Verbundbauteils können auch andere Dicken der Metallbleche verwendet werden.

In dem dargestellten Ausführungsbeispiel des erfindungsgemäßen Verfahrens wird die Polymerschaumschicht durch einen Extruder 8 unmittelbar auf das erste Metallband 6 extrudiert, wobei der Extruder 8 beispielsweise aus drei Einheiten aufgebaut ist. Die erste Einheit 9 schmilzt das Polymergranulat auf, wohingegen die zweite Einheit 10 vorzugsweise physikalisch Gasblasen, beispielsweise Luftblasen zur Ausbildung des Polymerschaums in die Polymerschmelze einbringt. Schließlich wird die mit Gasblasen versetzte Polymerschmelze über eine Extrudierdüse 11 auf das Metallband 6 extrudiert und bildet dort eine Polymerschaumschicht 4 aus. Das zweite Metallband 12 wird durch Abwickeln von einem Coil 13 zur Verfügung gestellt und vor dem Kontakt mit der Polymerschaumschicht 4 in einer Heizstrecke 14 erwärmt. Die Heizstrecke 14 ist wie die Heizstrecke 7 an das zu erwärmende Metall angepasst. Beispielsweise eignet sich bei der Verwendung von einer Stahllegierung eine induktive Erwärmung des Metallbandes. Es können aber auch andere Verfahren zur Erwärmung des Metallbandes genutzt werden.

Der Kontakt zwischen dem zweiten Metallband 12 und der Polymerschaumschicht 4 wird vorzugsweise erst innerhalb der Doppelbandpresse 15 realisiert, so dass durch gezieltes Heizen, in einer beispielsweise segmentierten Heizzone 15a bei Temperaturen zwischen 210 und 270 °C die mit Luftblasen versetzte Polymerschaumschicht 4 zwischen den Metallbändern 6, 12 verbunden wird. Im Bereich der Heizzonen 15a kann die Doppelbandpresse einen Überdruck von bis zu 30 bar aufbringen. Der aufgebaute Druck reicht für eine Vergleichmäßigung des Wärmeübergangs und für ein gutes Anschmelzen der Polymerschaumschicht 4 aus.

In einer weiteren Stufe kann in einer Druckzone 15b beispielsweise mittels nicht dargestellter Druckwalzen ein hoher Liniendruck von bis zu 20 bar auf das bandförmige Verbundbauteil 1 einwirken, wodurch sich die Haftung zwischen Metallblech 6, 11 und Polymerschaumschicht verbessern kann. Das bandförmige Verbundbauteil 1 wird anschließend in einer dritten Stufe, in einer segmentierten Kühlzone 15b definiert abgekühlt, um die Gesamt-Verbunddicke zu kalibrieren. Falls erforderlich, kann auslaufseitig der zweistufigen Doppelbandpresse eine zusätzliche Kühleinheit 16 angeordnet sein, um die Temperatur im bandförmigen Verbundbauteil 1 beispielsweise mittels Besprühen weiter absenken zu können.

Anschließend kann das bandförmige Verbundbauteil 1 einer Vereinzelung bzw. einer Umformung zur Herstellung eines fertigen Verbundbauteil oder eines Halbzeugs durchgeführt werden. Entsprechende Vorrichtungen sind in der Fig. 2 nicht dargestellt.

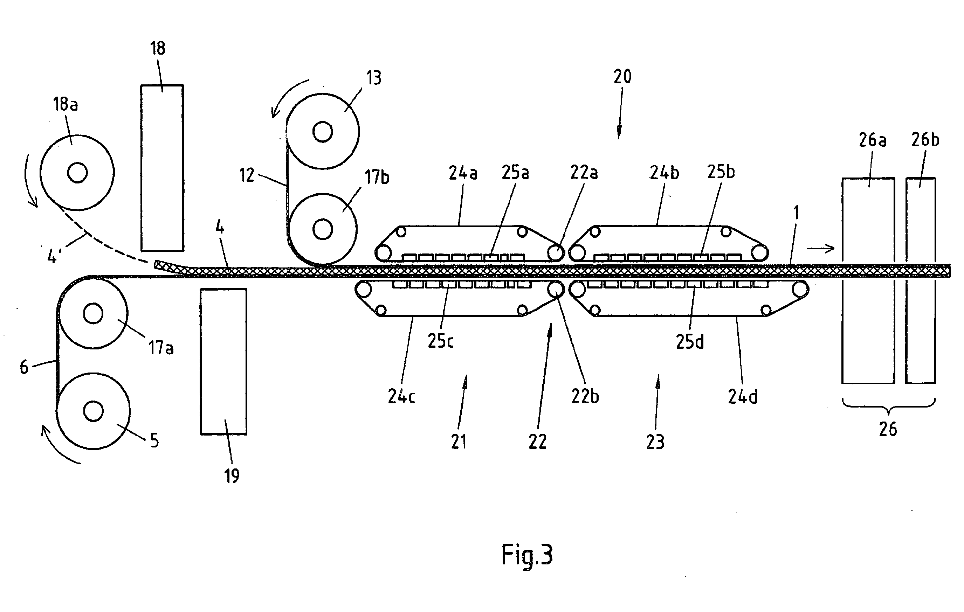

Schließlich zeigt Fig. 3 in einer schematischen Ansicht eine Vorrichtung zur Durchführung eines zweiten Ausführungsbeispiels des erfindungsgemäßen Verfahrens, bei welchem ein erstes Metallband 6 und über eine Heizrolle 17a erwärmt wird. Die Temperatur der Heizrolle 17 kann beispielsweise 240 °C betragen. Der Extruder 18 extrudiert direkt auf das erste Metallband 6 eine Polymerschaumschicht 4, wobei im Inneren des Extruders Gas unter Druck physikalisch in die Kunststoffschmelze eingebracht wird, welches bei der Druckentlastung am Austritt des Extruders 18 expandiert und feine Gasblasen bildet. Der Volumenanteil an Gasblasen kann 1 bis 80 %, vorzugsweise 5 bis 70 % betragen. Mit 40 % Gasblasenvolumentanteil wurden ebenfalls sehr gute Ergebnisse erzielt. Alternativ kann die Polymerschaumschicht aber auch als Folie 4' über ein Coil 18a zugeführt werden, was in Fig.3 angedeutet ist.

Eine hohe Prozesssicherheit bei der Gasblasenbildung ergab sich beim Einsatz eines Polyamid-Polyethylen-Blends in Verbindung mit einem Gemisch aus einem polaren Gas, beispielsweise Sauerstoff und einem unpolaren Gas, beispielsweise Stickstoff. Gute Ergebnisse wurden daher auch mit der Verwendung von Luft zur Blasenbildung erzielt.

Vor Einlauf in die Doppelbandpresse 20 wird eine Randstreifen-Regranulierung unter Verwendung einer Vorrichtung 19 durchgeführt, welche überstehende Reste der Polymerschaumschicht entfernt, weiterverarbeitet und beispielsweise Zerkleinert wieder dem Produktionsprozess zuführt.

Das zweite Metallband 12 wird dann über ein Coil 13 abgewickelt und über eine Heizrolle 17b auf die Polymerschaumschicht 4 aufgebracht. Aufgrund der hohen Temperatur des zweiten Metallbandes kann eine Verbindung durch Anschmelzen der Polymerschaumschicht 4 zwischen zweitem Metallband und der Polymerschaumschicht 4 erfolgen. Hierzu wird das erste Metallband 6 mit der darauf angeordneten Polymerschaumschicht 4 und das zweite Metallband 12 der Doppelbandpresse 20 zugeführt.

Die Doppelbandpresse 20 weist drei Bereiche auf, eine Heizzone 21, eine Druckzone 22 und eine Abkühlzone 23, wobei die Abkühlzone 23 und die Heizzone 21 jeweils getrennte Kaschierbänder 24a, 24b, 24c, 24d aufweisen. Vorzugsweise sind die Kaschierbänder oberflächenbeschichtet und Oberflächen bearbeitet. In der Heizzone 21 wird in dem vorliegenden Ausführungsbeispiel bei einem geringen Druck von etwa 0,2 bis 0,5 bar eine Temperatur von etwa 230 °C über ein durch die Platten 25a und 25c durchfließendes Temperiermedium eingestellt. Das Temperiermedium kann aber auch höhere Temperaturen, beispielsweise 260 °C aufweisen.

Kaschierwalzen 22a und 22b, welche die Druckzone 22 im vorliegenden Ausführungsbeispiel bilden, üben nach dem Durchlauf durch die Heizzone 21 einen Druck auf das bandförmige Verbundbauteil 1 aus, welcher beispielsweise im Bereich von etwa 12 bar liegen kann. Ungleichmäßigkeiten, beispielsweise in der Dicke des bandförmigen Verbundbauteils werden hierdurch egalisiert. Denkbar ist aber auch, dass höhere Drücke durch die Kaschierwalzen auf das Verbundbauteil ausgeübt werden. Beispielsweise kann der Druck bis zu 50 oder 100 kN betragen.

Vorzugsweise ist der Spalt, welcher durch die Kaschierbänder 24a und 24c in der Heizzone 21 vorliegt, keilförmig zu laufend, so dass die Polymerschaumschicht 4 verdichtet wird. Zur Verbesserung der Gleichmäßigkeit werden die Platten 25a und 25c sowie 25b und 25d um eine halbe Platte gegeneinander versetzt angeordnet.

In der Kühlzone 23 wird das bandförmige Verbundbauteil 1 auf eine Temperatur von weniger als 180 °C abgekühlt. Über die Platten 25b und 25d wird weiterhin ein Druck von etwa 0,2 bis 0,5 bar auf das Verbundbauteil 1 ausgeübt. Aufgrund der niedrigen Drücke ist eine Randabdichtung, wie es bisher üblich war, wenn hohe Drücke verwendet wurden, nicht mehr notwendig und vereinfacht damit das Herstellverfahren deutlich.

Die Platten 25b und 25d werden hierzu von einem Kühlmedium durchflossen. Beispielsweise können die Platten 25b und 25d mit einem Kühlmedium mit einer Temperatur von 20 °C durchflossen werden, um eine deutliche Abkühlung des Verbundbauteils zu erzielen. Anschließend durchläuft das bandförmige Verbundbauteil 1 zumindest eine Kühlvorrichtung 26. Die Kühlung erfolgt durch Aufspritzen von Wasser 26a und späteres Abquetschwalzen 26b zur Entfernung des Wassers.

## Patentansprüche

1. Verfahren zur Herstellung eines Verbundbauteils aufweisend mindestens ein erstes und ein zweites Metallblech mit mindestens einer zwischen dem ersten und dem zweiten Metallblech angeordneten Schicht aus einem Polymer, **dadurch gekennzeichnet, dass** ein erstes Metallband von einem ersten Coil und ein zweites Metallband von einem zweiten Coil abgewickelt wird,
auf mindestens ein Metallband eine thermoplastische Polymerschaumschicht enthaltend ein Polyamid-Polyethylenblend aufgebracht wird,
die Ausbildung der Polymerschaumschicht durch physikalisches Einbringen von Gasblasen in die Polymerschmelze erfolgt, so dass die Polymerschaumschicht einen Volumenanteil an Gasblasen von 1 % bis 80 %, vorzugsweise 5 % bis 70 % aufweist,
das erste Metallband, die thermoplastische Polymerschaumschicht und das zweite Metallband durch Temperatureinwirkung und Druckausüben mit einander verbunden werden und
das hergestellte, bandförmige Verbundbauteil auf ein Coil aufgewickelt oder zu blechförmigen Verbundbauteilen geschnitten wird.

2. Verfahren nach Anspruch 1,
**dadurch gekennzeichnet, dass** die Polymerschaumschicht als vorextrudierte Folie auf das erste Metallband aufgebracht oder die Polymerschaumschicht direkt auf das erste Metallband extrudiert wird.

3. Verfahren nach Anspruch 1 oder 2,
**dadurch gekennzeichnet, dass** das erste Metallband vor dem Aufbringen der Polymerschaumschicht und/oder das zweite Metallband vor dem Aufbringen auf die Polymerschaumschicht erwärmt werden.

4. Verfahren nach einem der Ansprüche 1 bis 3,
**dadurch gekennzeichnet, dass** das erste Metallband, die Polymerschaumschicht und das zweite Metallband durch Verwendung einer Doppelbandpresse miteinander verbunden werden, wobei innerhalb der Doppelbandpresse eine geregelte Druck- und Temperaturführung sowie eine Abstandsregelung erfolgt.

5. Verfahren nach Anspruch 4,
**dadurch gekennzeichnet, dass** die Doppelbandpresse zumindest eine Heizzone und eine Abkühlzone sowie optional eine Druckzone aufweist.

6. Verfahren nach einem der Ansprüche 1 bis 5,
**dadurch gekennzeichnet, dass** Kaschierbänder in der Doppelbandpresse verwendet werden, deren auf dem bandförmigen Verbundbauteil aufliegende äußere Oberfläche beschichtet und optional oberflächenbearbeitet ist.

7. Verfahren nach einem der Ansprüche 1 bis 6,
**dadurch gekennzeichnet, dass** das bandförmige Verbundbauteil vor und/oder nach der Vereinzelung zu blechförmigen Verbundbauteilen umgeformt wird.

8. Verbundbauteil (1) hergestellt mit einem Verfahren nach Anspruch 1 bis 7, aufweisend mindestens ein erstes und ein zweites Metallblech (2, 3) mit mindestens einer zwischen dem ersten und dem zweiten Metallblech angeordneten Schicht (4) aus einem Polymer, wobei die Polymerschicht mindestens eine Polymerschaumschicht (4) aus einem thermoplastischen Polymer enthaltend ein Polyamid-Polyethylenblend aufweist, wobei die Polymerschaumschicht (4) physikalisch eingebrachte Gasblasen mit einem Volumenanteil von 1 % bis 80 %, insbesondere 5 bis 70 % aufweist.

9. Verbundbauteil nach Anspruch 8,
**dadurch gekennzeichnet, dass** die Schichtdicke der Polymerschaumschicht (4) zwischen 50 µm und 5000 µm, vorzugsweise zwischen 200 µm und 1000 µm beträgt:

10. Verbundbauteil nach Anspruch 8 oder 9,
**dadurch gekennzeichnet, dass** die Dicke der verwendeten Metallbleche (2, 3) zwischen 0,15 und 3,0 mm beträgt.

11. Verbundbauteil nach einem der Ansprüche 8 bis 10,
**dadurch gekennzeichnet, dass** die Metallbleche aus einer Legierung aus Stahl, Aluminium, Magnesium und/oder Titan bestehen.

12. Verwendung eines Verbundbauteils nach einem der Ansprüche 8 bis 11 im Kraftfahrzeug-, Flugzeug-, Schiff-, U-Boot-, Schienenfahrzeugbau, in der Raumfahrt oder im Bauwesen.

## Claims

1. Method for the production of a composite component comprising at least one first and one second sheet metal plate with at least one layer of a polymer arranged between the first and the second sheet metal plate, **characterised in that** a first metal strip is unwound from a first coil and a second metal strip is unwound from a second coil,
a thermoplastic foamed polymer layer comprising a blend of polyamide and polyethylene is applied onto at least one metal strip,
the foamed polymer layer is produced by physically introducing gas bubbles into the polymer melt, so that the foamed polymer layer comprises gas bubbles with a volume percentage of 1% to 80%, preferably 5% to 70%,
the first metal strip, the thermoplastic foamed polymer layer and the second metal strip are bonded to one another through the effect of temperature and exertion of pressure and
the linear composite component that is produced is wound onto a coil or cut into sheet-like composite components.

2. Method according to claim 1,
**characterised in that** the foamed polymer layer is applied onto the first metal strip as pre-extruded foil or the foamed polymer layer is extruded directly onto the first metal strip.

3. Method according to claim 1 or 2,
**characterised in that** the first metal strip is heated before the foamed polymer layer is applied and/or the second metal strip is heated before being applied onto the foamed polymer layer.

4. Method according to any one of claims 1 to 3,
**characterised in that** the first metal strip, the foamed polymer layer and the second metal strip are bonded to one another by using a double band press, wherein regulated control of temperature and pressure and also distance regulation take place inside the double band press.

5. Method according to claim 4,
**characterised in that** the double band press comprises at least one heating zone and a cooling zone and also optionally a pressure zone.

6. Method according to any one of claims 1 to 5,
**characterised in that** laminating strips, whose outer surface lying on the linear composite component is coated and optionally surface-treated, are used in the double band press.

7. Method according to any one of claims 1 to 6,
**characterised in that** the linear composite component is shaped before and/or after separation into sheet-like composite components.

8. Composite component (1) manufactured by a method according to claims 1 to 7, comprising at least one first and one second sheet metal plate (2, 3) with at least one layer of a polymer (4) arranged between the first and the second sheet metal plate (4),
whereby the polymer layer has at least one foamed polymer layer (4) of a thermoplastic polymer comprising a blend of polyamide and polyethylene, wherein the foamed polymer layer (4) comprises gas bubbles with a volume percentage of 1% to 80%, in particular 5 to 70%.

9. Composite component according to claim 8,
**characterised in that** the layer thickness of the foamed polymer layer (4) is between 50 µm and 5000 µm, preferably between 200 µm and 1000 µm.

10. Composite component according to claim 8 or 9,
**characterised in that** the thickness of the sheet metal plates (2, 3) that are used is between 0.15 and 3.0 mm.

11. Composite component according to any one of claims 8 to 10,
**characterised in that** the sheet metal plates consist of a steel, aluminium, magnesium and/or titanium alloy.

12. Use of a composite component according to any one of claims 8 to 11 in the automobile, aircraft, ship, submarine, rail-mounted vehicle construction, in space or construction industries.

## Revendications

1. Procédé de fabrication d'un élément composite présentant au moins une première et une deuxième tôle métallique comprenant au moins une couche d'un polymère disposée entre la première et la deuxième tôle métallique, **caractérisé en ce qu'**une première bande métallique est déroulée d'une première bobine et une deuxième bande métallique est déroulée d'une deuxième bobine,
une couche de mousse polymère thermoplastique comprenant un mélange de polyéthylène-polyamide est appliquée sur au moins une bande métallique,
la formation de la couche de mousse polymère est effectuée par l'introduction physique de bulles de gaz dans la fonte de polymère, de telle sorte que la couche de mousse polymère présente une part volumique en bulles de gaz de 1% à 80%, de préférence de 5% à 70%,
la première bande métallique, la couche de mousse polymère thermoplastique et la deuxième bande métallique sont reliées entre elles par un effet de température et l'application d'une pression, et
l'élément composite en forme de bande fabriqué est enroulé sur une bobine ou coupé en éléments composites en forme de tôle.

2. Procédé selon la revendication 1,
**caractérisé en ce que** la couche de mousse polymère est appliquée sur la première bande métallique en tant que film pré-extrudé ou la couche de mousse polymère est extrudée directement sur la première bande métallique.

3. Procédé selon la revendication 1 ou 2,
**caractérisé en ce que** la première bande métallique, avant l'application de la couche de mousse polymère, et/ou la deuxième couche métallique, avant l'application sur la couche de mousse polymère, est/sont chauffée(s).

4. Procédé selon l'une des revendications 1 à 3,
**caractérisé en ce que** la première bande métallique, la couche de mousse polymère et la deuxième couche métallique sont reliées entre elles en utilisant une presse à bande double, dans lequel à l'intérieur de la presse à bande double, le guidage de la température et de la pression ainsi la distance sont réglés.

5. Procédé selon la revendication 4,
**caractérisé en ce que** la presse à bande double présente au moins une zone de chauffage et une zone de refroidissement ainsi qu'une zone de pression en option.

6. Procédé selon l'une des revendications 1 à 5,
**caractérisé en ce que** des bandes de laminage sont employées dans la presse à bande double, dont la surface extérieure reposant sur l'élément composite en forme de bande est revêtu et traité à la surface en option.

7. Procédé selon l'une des revendications 1 à 6,
**caractérisé en ce que** l'élément composite en forme de bande est transformé en éléments composites en forme de tôle avant et/ou après l'individualisation.

8. Élément composite (1) fabriqué avec un procédé selon les revendications 1 à 7, présentant au moins une première et une deuxième tôle métallique (2, 3) comprenant au moins une couche (4) de polymère disposée entre la première et la deuxième tôle métallique, dans lequel la couche de polymère présente au moins une couche de mousse polymère (4) dans un polymère thermoplastique comprenant un mélange de polyéthylène-polyamide, dans lequel la couche de mousse polymère (4) présente des bulles de gaz introduites physiquement, avec une part volumique de 1% à 80%, de préférence de 5% à 70%.

9. Élément composite selon la revendication 8,
**caractérisé en ce que** l'épaisseur de la couche de la couche de mousse polymère (4) mesure entre 50 µm et 5000 µm, de préférence entre 200 µm et 1000 µm.

10. Élément composite selon la revendication 8 ou 9,
**caractérisé en ce que** l'épaisseur de la tôle métallique (2, 3) employée mesure entre 0,15 et 3 mm.

11. Élément composite selon l'une des revendications 8 à 10,
**caractérisé en ce que** les tôles métalliques sont composées d'un alliage d'acier, d'aluminium, de magnésium et/ou de titane.

12. Emploi d'un élément composite selon l'une des revendications 8 à 11 dans la construction automobile, aéronautique, navale, de sous-marins, de véhicules ferroviaires, construction spatiale ou dans le bâtiment.
